Europäisches Patentamt

European Patent Office

Office européen des brevets

(11) Publication number: **0 084 229**
**B1**

# EUROPEAN PATENT SPECIFICATION

(45) Date of publication of patent specification: **27.03.85**

(51) Int. Cl.⁴: **F 16 C 33/76, F 16 C 19/16**

(21) Application number: **82306550.3**

(22) Date of filing: **08.12.82**

(54) Sealed thrust bearing assembly.

(30) Priority: **15.01.82 US 339189**

(43) Date of publication of application:
**27.07.83 Bulletin 83/30**

(45) Publication of the grant of the patent:
**27.03.85 Bulletin 85/13**

(84) Designated Contracting States:
**DE FR GB**

(56) References cited:
**DE-C-1 259 148**
**GB-A-1 350 236**
**US-A-3 951 482**
**US-A-4 120 543**

(73) Proprietor: **GENERAL MOTORS CORPORATION**
**General Motors Building 3044 West Grand**
**Boulevard**
**Detroit Michigan 48202 (US)**

(72) Inventor: **Lederman, Frederick Edward**
**104 Stonyridge Drive**
**Sandusky Ohio 44870 (US)**

(74) Representative: **Breakwell, John Neil Bower**
**et al**
**GM Patent Section Luton Office (F6) P.O. Box**
**No. 3 Kimpton Road**
**Luton Beds. LU2 OSY (GB)**

Courier Press, Leamington Spa, England.

## Description

The invention relates to a sealed thrust bearing assembly.

Angular-contact thrust bearings designed to carry high, axially directed thrust loads may be manufactured economically from stamped annular metal races which are heat-treated with the confronting curvilinear raceways thereof left unground. It is necessary to seal the races to retain the lubricant, and it is desirable to create a unitized assembly in which the races are held together prior to incorporation of the bearing into some other assembly.

United States Patent 4,120,543 (Greene Jr. et al) discloses a sealed thrust bearing assembly comprising first and second coaxially disposed bearing races formed with respective curvilinear raceways that are in confronting relationship and accommodate a complement of bearing balls therebetween, the second bearing race having first and second elastomeric sealing lips engageable with the first bearing race to establish a condition of sealed push-fit locking interengagement of the respective bearing races.

The sealed thrust bearing assembly disclosed in the said United States patent is an angular-contact thrust bearing for a McPherson-type strut in which an elastomeric sealing lip on the inner edge of one race snaps over the inner edge of the other race to both seal the inner edges of the two races and retain the races together as a unitized assembly.

In some applications, however, it is desirable to have a bearing in which one of the bearing races has an axially extending cylindrical flange at the inner edge thereof which extends for the entire axial thickness of the bearing assembly to provide an unobstructed metal tunnel at the center of the bearing assembly. It is not possible with such an assembly to have an elastomeric lip engage this central tunnel without obstructing it.

It is known to unitize such an assembly with a separate metal ring which is press-fitted around the cylindrical flange and seats against a sealing lip on the other race to prevent the races from separating; however, from the standpoint of ease of manufacture it is desirable to eliminate the separate ring.

By the present invention there is provided a sealed thrust bearing assembly comprising first and second coaxially disposed bearing races formed with respective curvilinear raceways that are in confronting relationship and accommodate a complement of bearing balls therebetween, the second bearing race having first and second elastomeric sealing lips engageable with the first bearing race to establish a condition of sealed push-fit locking interengagement of the respective bearing races, characterised in that the first bearing race also includes at the inner end thereof a cylindrical flange extending axially in a direction towards the second bearing race of the bearing assembly at the inner edge thereof, the cylindrical flange including an inner, radially inwardly facing wall and an outer, radially outwardly facing wall, the outer wall having a sealing surface sloped axially and radially inwardly with respect to the bearing assembly axis and a radially outwardly extending retention rib at the axially inward terminus of the sealing surface, and that the second bearing race has a first elastomeric sealing lip as aforesaid engageable with the first race and a second elastomeric sealing lip as aforesaid that is a deflectable sealing lip having an outer wall sloped in the same direction as the sealing surface but at a greater angle with respect to the bearing assembly axis in the undeformed state of the sealing lip, and terminating in an axially inwardly facing retention shoulder, relative axial movement of the bearing races towards one another during assembly deflecting the second sealing lip radially outwardly and axially inwardly as the outer wall of the second sealing lip slides axially past the retention rib and into sealing engagement with the sealing surface and the retention shoulder moves to a position adjacent the retention rib, such that any relative axial movement tending to separate the bearing races engages the retention shoulder with the retention rib to maintain the races as a unitary assembly.

Thereby, a sealed unitized thrust bearing assembly is available without any obstruction of the central axial tunnel provided by the cylindrical flange.

In one specific bearing assembly in accordance with the present invention, the first bearing race has a radially outwardly directed flange at the outer edge thereof and an axially extending central cylindrical flange at the inner edge thereof, with a curvilinear raceway therebetween. The cylindrical flange has a radially outwardly facing wall, and a radially inwardly facing wall providing the central axial tunnel. The radially outwardly facing wall further includes a retention groove providing a sealing surface sloped axially and radially inwardly of the bearing assembly axis, and a radially outwardly extending retention rib at the axially inward terminus of the retention groove.

The second bearing race includes a curvilinear raceway in confronting relation to the raceway of the first race, with a complement of bearing balls engaged therebetween. The second bearing race further includes first and second elastomeric sealing lips bonded respectively to the outer and inner edges thereof. The first sealing lip is sealingly engageable with the flange at the outer edge of the first race, and the second sealing lip is deflectable and has an outer wall which, in its undeformed state, is sloped in the same direction as the sealing surface of the first race and is at a greater angle to the bearing assembly axis. The outer wall of the second sealing lip terminates in an axially inwardly facing shoulder which, in its undeformed state, has a diameter slightly smaller than the minimum diameter of the sealing surface of the first race.

When the two bearing races are moved coaxially together during assembly, the second sealing lip is deflected radially outwardly as the outer wall thereof slides axially past the retention rib. The second sealing lip moves into sealing contact with the sealing surface of the first race as the retention shoulder moves axially past and adjacent the retention rib, and the first sealing lip simultaneously moves into sealing contact with the first race. Thereafter, any axial movement tending to separate the races engages the retention shoulder with the retention rib to jam and compress the second sealing lip. Such lip and the retention rib thus act in effect as a one-way gate to prevent axial separation of the races and maintain them as a unitary assembly.

In the drawing:

Figure 1 is a front view, partially broken away, of one embodiment of a sealed thrust bearing assembly in accordance with the present invention;

Figure 2 is a cross-sectional view, with parts in elevation, on the line 2—2 of Figure 1, in the direction of the arrows; and

Figure 3 is an enlarged view of a portion of Figure 2.

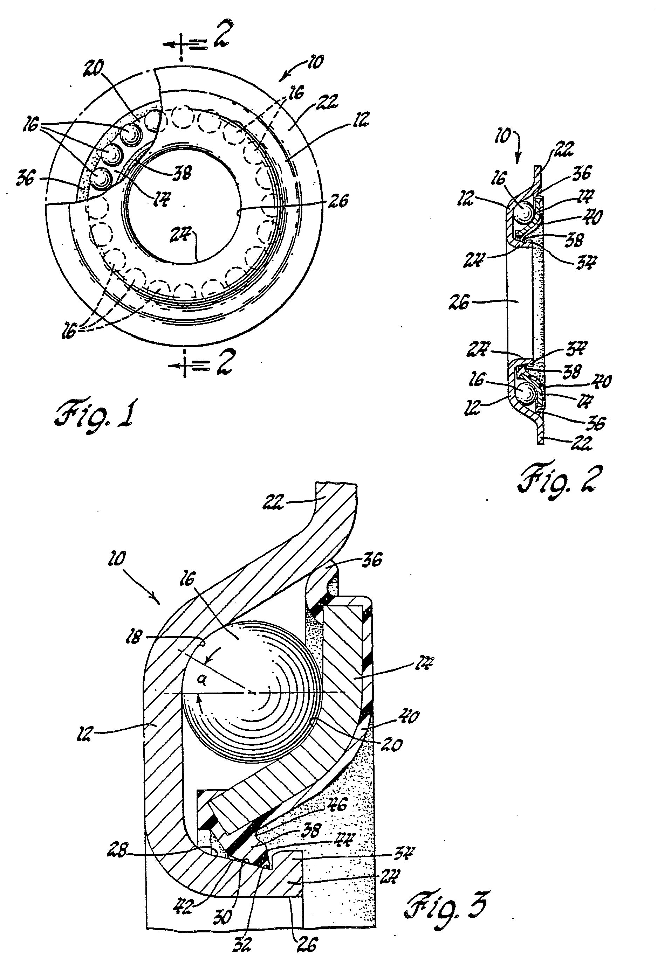

As is shown in Figures 1 and 2 of the drawing, a bearing assembly generally designated 10 includes a first annular race 12 and a second annular race 14, with a full complement of bearing balls 16 therebetween.

The races 12 and 14 are metal stampings, and each has a curvilinear raceway therein, designated respectively 18 and 20, which engages bearing balls 16 at a contact angle a of approximately 30° relative to the axis of the bearing assembly 10. The races 12 and 14 are heat-treated; the raceways 18 and 20 are left unground. The bearing assembly 10 is a unitized and sealed assembly as is described further below.

The first race 12 includes an outer radially extending flange 22 integral with the outer side of the raceway 18, and an inner cylindrical flange 24 integral with the inner side of the raceway 18 and extending axially inwardly of the bearing assembly 10 in a direction towards the second bearing race for substantially the entire axial thickness thereof. The flange 22 serves as a structural member for attachment of the bearing assembly 10 to another structure, such as an elastomer pad in a McPherson strut; it could alternatively be of a different shape, or be eliminated.

The cylindrical flange 24 has a radially inwardly facing inner wall 26 and a radially outwardly facing outer wall 28, best seen in Figure 3. After the flange 22, the raceway 18 and the flange 24 of the race 12 have been stamped in a first operation, the axially innermost edge portion of the outer wall 28 is upset to form a retention groove 30 having an axially and radially inwardly sloping annular sealing surface 32 and a radially outwardly extending retention rib 34 at the axially inward terminus of the sealing surface 32 formed from the metal removed from the outer wall 28 to form the sealing surface 32. The inner wall 26 provides a central, continuous axial tunnel which can receive the piston rod of a McPherson strut or can contain part of the elastomer pad of a McPherson strut. Since the inner wall 26 must accordingly be unobstructed, only the outer wall 28 co-operates in the retention of the races 12 and 14, as will be described below.

As is shown in Figures 2 and 3, the second race 14 includes a first elastomeric sealing lip 36 at the outer edge thereof, a second elastomeric sealing lip 38 at the inner edge thereof, and a thin outer cover layer of elastomer 40 integral with the sealing lips 36 and 38. The layer 40 creates effective frictional engagement between the outside of the race 14 and another structural member, such as the spring seat of a McPherson strut. The sealing lip 38 has a generally frustoconical cross-section, and includes an outer sealing wall 42, an axially inwardly facing retention shoulder 44, and an annular relieved portion 46 at the juncture with the layer 40. In the undeformed state of the lip 38, the wall 42 is sloped in the same direction as the sealing surface 32 but at a larger angle with respect to the axis of the bearing assembly, whereas the retention shoulder 44 is generally perpendicular to the axis and has a diameter slightly smaller than the minimum diameter of the sealing surface 32 adjacent the rib 34. The annular relieved portion 46 allows the sealing lip 36 to deflect easily in a radially outward and axially inward direction.

During assembly, as the race 14 is moved coaxially towards the race 12, the sealing lip 38 is deflected radially outwardly and axially inwardly by the engagement of the wall 42 with the retention rib 34 as the lip slides past the rib. When the wall 42 has moved completely past the rib 34, it snaps into sealing engagement with the sealing surface 32, and the retention shoulder 44 moves into a position adjacent the retention rib 34. Simultaneously, the sealing lip 36 sealingly engages the race 12, whereby the assembly of the bearing assembly 10 is completed. Both of the sealing lips 36 and 38 remain under slight deformation, and act as land-riding seals.

The sealing lip 38 and the rib 34 retain the races 12 and 14 as a unitized assembly. After assembly, any force tending to separate the races 12 and 14 in an axial direction will engage the axially inwardly facing retention shoulder 44 with the retention rib 34 to jam and compress the sealing lip 38.

Therefore, the invention provides a sealed and unitized bearing assembly in which one of a pair of sealing lips sealingly engages the outer wall of a central cylindrical flange as well as co-operating with a retention rib thereon to maintain the races as a unitized assembly without the use of any retention members apart from the races themselves.

**Claim**

A sealed thrust bearing assembly comprising first and second coaxially disposed bearing races (12 and 14) formed with respective curvilinear raceways (18 and 20) that are in confronting relationship and accommodate a complement of bearing balls (16) therebetween, the second bearing race (14) having first and second elastomeric sealing lips (36 and 38) engageable with the first bearing race (12) to establish a condition of sealed push-fit locking interengagement of the respective bearing races, characterised in that the first bearing race (12) also includes at the inner end thereof a cylindrical flange (24) extending axially in a direction towards the second bearing race (14) of the bearing assembly, the cylindrical flange including an inner, radially inwardly facing wall (26) and an outer, radially outwardly facing wall (28), the outer wall having a sealing surface (32) sloped axially and radially inwardly with respect to the bearing assembly axis and a radially outwardly extending retention rib (34) at the axially inward terminus of the sealing surface (32), and that the second bearing race (14) has a first elastomeric sealing lip (36) as aforesaid engageable with the first race and a second elastomeric sealing lip as aforesaid that is a deformable sealing lip (38) having an outer wall (42) sloped in the same direction as the sealing surface (32) but at a greater angle with respect to the bearing assembly axis in the undeformed state of the sealing lip, and terminating in an axially inwardly facing retention shoulder (44), relative axial movement of the bearing races towards one another during assembly deflecting the second sealing lip (38) radially outwardly and axially inwardly as the outer wall (42) of the second sealing lip slides axially past the retention rib (34) and into sealing engagement with the sealing surface (32) and the retention shoulder (44) moves to a position adjacent the retention rib, such that any relative axial movement tending to separate the bearing races engages the retention shoulder (44) with the retention rib (34) to maintain the races as a unitary assembly.

**Patentanspruch**

Eine abgedichtete Drucklageranordnung mit ersten und zweiten koaxial angeordneten Lagerläufen (12 und 14), die mit jeweiligen linear gekrümmten Laufwegen (18 und 20) ausgebildet sind, die in einander gegenüberliegender Beziehung angeordnet sind und ein Komplement von Lagerkugeln (16) dazwischen aufnehmen, wobei der zweite Lagerlauf (14) erste und zweite elastomere Dichtlippen (36 und 38) besitzt, die mit dem ersten Lagerlauf (12) in Eingriff bringbar sind, um einen Zustand abgedichteten gegenseitigen Stoßpassungs-Sperreingriffs der jeweiligen Lagerläufe zu erzeugen, dadurch gekennzeichnet, daß der erste Lagerlauf (12) an seinem inneren Ende auch einen zylindrischen Flansch (24) enthält, der sich in einer Richtung zu dem zweiten Lagerlauf (14) hin axial zur Lageranordnung erstreckt, daß der zylindrische Flansch eine innere, radial nach innen gewendete Wand (26) und eine äußere, radial nach außen gewendete Wand (28) besitzt, wobei die äußere Wand eine axial und radial nach innen bezüglich der Achse der Lageranordnung schräg verlaufende Dichtfläche (32) und eine sich radial nach außen erstreckende Halterippe (34) an der axial inneren Endstelle der Dichtfläche (32) besitzt, und daß der zweite Lagerlauf (14) eine erste elastomere Dichtlippe (36) wie erwähnt besitzt, die mit dem ersten Lauf in Eingriff bringbar ist und eine zweite elastomere Dichtlippe wie erwähnt, die eine ablenkbare Dichtlippe (38) ist mit einer äußeren Wand (42), die in der gleichen Richtung wie die Dichtfläche (32) schräg verläuft, jedoch mit einem größeren Winkel bezüglich der Achse der Lageranordnung im unverformten Zustand der Dichtlippe, die in eine axial nach innen gewendete Halteschulter (44) ausläuft, wobei relative Axialbewegung der Lagerläufe gegeneinander während des Zusammenbaus die zweite Dichtlippe (38) radial nach außen und axial nach innen abbiegen, wenn die äußere Wand (42) der zweiten Dichtlippe axial an der Halterippe (34) vorbei und in Dichteingriff mit der Dichtfläche (32) gleitet und die Halteschulter (44) sich in eine Lage benachbart zur Halterippe bewegt, so daß irgendeine axiale Relativbewegung, die die Lagerläufe zu trennen neigt, die Halteschulter (44) mit der Halterippe (34) in Eingriff bringt, um die Läufe als eine einheitliche Anordnung zu halten.

**Revendication**

Un ensemble de palier de butée étanche, comprenant une première et une deuxième bagues de roulement de palier (12 et 14) disposées coaxialement, munies de chemins de roulement respectifs curvilignes (18 et 20) qui sont dans des positions opposées face à face et reçoivent entre eux une garniture de billes de roulement (16), la deuxième bague de palier (14) présentant une première et une deuxième lèvres d'étanchéité en élastomère (36 et 38) qui peuvent coopérer avec la première bague de roulement de palier (12) pour établir une prise de verrouillage étanche, ajustée par poussée entre les deux bagues de roulement du palier, caractérisé en ce que la première bague de roulement (12) du palier comprend également, au niveau de son extrémité intérieure, un collet cylindrique (24) qui s'étend axialement en direction de la deuxième bage de roulement de palier (14) de l'ensemble de palier, le collet cylindrique possédant une paroi intérieure (26) orientée radialement vers l'intérieur et une paroi extérieure (28) orientée radialement vers l'extérieur, la paroi extérieure possédant une surface d'étanchéité (32) inclinée axialement et radialement vers l'intérieur par rapport à l'axe de l'ensemble de palier et une nervure de retenue (34) s'étendant radialement vers l'extérieur à l'extrémité axialement intérieure de la surface d'étanchéité (32) et en ce que la deuxième bague de roulement de palier (14) possède une première lèvre d'étanchéité (36) en élastomère, comme indiqué plus haut, qui peut coopérer avec la première bague de roulement de palier et une deuxième lèvre d'étanchéité en élastomère, comme indiqué plus haut, qui est une lèvre d'étanchéité flexible (38), qui possède une paroi extérieure (42) inclinée dans le même sens que la surface d'étanchéité (32) mais en formant un plus grand angle par rapport à l'axe de l'ensemble parlier dans l'état non déformé de la lèvre d'étanchéité, et qui se termine par un épaulement de retenue (44) orienté radialement vers l'intérieur, le mouvement axial relatif des bagues de portée dans le sens qui les rapproche l'une de l'autre pendant l'assemblage faisant fléchir la deuxième lèvre d'étanchéité (38) radialement vers l'extérieur et axialement vers l'intérieur au moment où la paroi extérieure (42) de la deuxième lèvre d'étanchéité franchit axialement la nervure de retenue (34) en glissant et entre en contact hermétiquement avec la surface d'étanchéité (32) et l'épaulement de retenue (44) prend une position adjacente à la nervure de retenue, de telle sorte que tout mouvement axial relatif tendant à séparer les bagues de roulement du palier met l'épaulement de retenue (44) en prise avec la nervure de retenue (34) pour maintenir les bagues de roulement assemblées en un ensemble unitaire.

Fig. 1

Fig. 2

Fig. 3

1